# EUROPÄISCHE PATENTSCHRIFT

(11) **EP 0 743 281 B1**
(45) Veröffentlichungstag und Bekanntmachung des Hinweises auf die Patenterteilung: **18.03.1998**
(21) Anmeldenummer: 96107132.1
(22) Anmeldetag: 07.05.1996
(51) Int. Cl.: C01B 13/02

(54) **Verfahren zur adsorptiven Sauerstoffanreicherung von Luft mit Mischungen aus Molekularsieb-Zeolithen**
Process for adsorptive oxygen enrichment of air with mixtures of molecular sieve zeolites
Procédé pour l'enrichissement en oxygène de l'air par adsorption d'air avec des mélanges de zéolithes à tamis moléculaires

(30) Priorität: 19.05.1995 DE 19518407
(43) Veröffentlichungstag der Anmeldung: 20.11.1996
(73) Patentinhaber: BAYER AG, 51368 Leverkusen (DE)
(72) Erfinder: Reiss, Gerhard, 51375 Leverkusen (DE); Puppe, Lothar, Dr., 51399 Burscheid (DE); Hees, Bruno, 40764 Langenfeld (DE)

(56) Entgegenhaltungen:
- EP-A- 0 078 966
- EP-A- 0 128 545
- EP-A- 0 374 631
- DATABASE WPI Section Ch, Week 8732 Derwent Publications Ltd., London, GB; Class E36, AN 87-224219 XP002007782 & JP-A-62 148 304 (NIPPON SANSO KK) , 2.Juli 1987
- DATABASE WPI Section Ch, Week 9248 Derwent Publications Ltd., London, GB; Class E36, AN 92-394421 XP002007783 & JP-A-04 293 513 (SHOWA ENG KK) , 19.Oktober 1992

## Beschreibung

Die vorliegende Erfindung betrifft ein verbessertes Verfahren zur Sauerstoffanreicherung von Luft unter Einsatz der Vakuum-Swing-Adsorption (VSA) und/oder Druck-Swing-Adsorption (PSA).

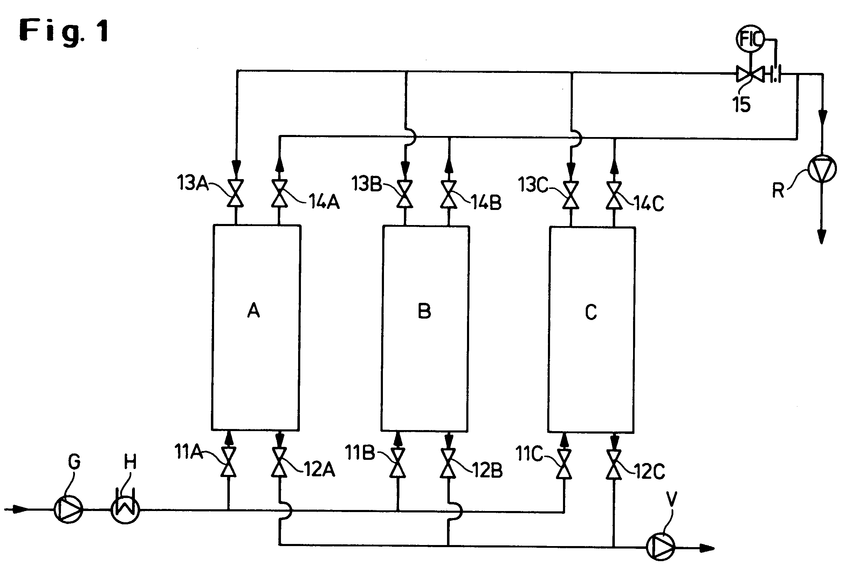

Die direkte Erzeugung von Sauerstoff aus Luft bei Umgebungstemperaturen wird industriell bereits umfangreich mit Molekularsieb-Zeolithen durchgeführt (vgl. z.B. Gas Review Nippon, S. 13, No. 5, 1985). Hierbei wird die bevorzugte Adsorption von Stickstoff gegenüber Sauerstoff ausgenutzt, d.h. der Stickstoff der Luft wird adsorbiert, die weniger stark adsorbierten Komponenten wie Sauerstoff und Argon werden beim Durchströmen der Luft durch eine Zeolithschüttung am Austritt dieser Schüttung als Produkt aufgefangen. Die Desorption des adsorbierten Stickstoffs kann dann z.B. durch Evakuieren der Schüttung erfolgen. Fur diesen Fall bezeichnet man den Prozeß als Vakuum-Swing-Adsorption (VSA), im Gegensatz zur ebenfalls bekannten Pressure-Swing-Adsorption (PSA). Einen kontinuierlich: Prozeß erreicht man im VSA-Prozeß durch folgende Verfahrensschritte: a) Durchleiten von Luft durch Zeolithschüttung bei atmosphärischem Druck; an der Austrittseite wird O₂-reiches Gas abgezogen; b) Evakuieren der Schüttung mit einer Vakuumpumpe auf einen Unterdruck von etwa 100 bis 300 mbar im Gegenstrom der Luftströmung; c) Befüllen der Schüttung mit O₂-reichem Gas auf 1 atm im Gegenstrom zur Luftströmung (siehe z.B. Fig. 1). Im PSA-Prozeß wird Schritt b) bei ca. 1 atm unter Spülung mit einem Teil des O₂-reichen Gases durchgeführt. Im PVSA-Prozeß wird die Trennung bei transatmosphärischem Druck, z.B. bei 1,1 bis 2 bar und die Desorption bei ca. 200 bis 500 mbar (Minimaldruck) durchgeführt. Ziel dieses Prozesses ist immer eine hohe Produktrate - bezogen auf eingesetzte Zeolithmenge - zu erhalten und eine hohe O₂-Ausbeute (= Verhältnis von O₂-Menge im Produkt zu O₂-Menge der eingeströmten Luft) zu erreichen.

Bedingt durch die drei obengenannten Schritte hat man meist drei Zeolithschüttungen, d.h. drei Adsorber, die zyklisch betrieben werden.

Die Wirtschaftlichkeit derartiger Anlagen wird durch die Investition, wie z.B. Adsorptionsmittelmenge, Vakuumpumpengröße, und insbesondere durch die Betriebskosten, wie Stromverbrauch der Vakuumpumpen, beeinflußt. Es wurden daher Zeolithe hergestellt, mit denen es möglich ist hohe Stickstoffadsorptionen zu erreichen, sodaß die eingesetzte Zeolithmenge reduziert werden konnte. Derartige Ca-Zeolithe-A werden in EP-A-128 545 beschrieben.

In EP-A-78 966 wird zur Erhöhung der Stickstoff-Adsoprtionsleistung ein hoch ausgetauschter Ca-Zeolith X eingesetzt.

Auch in Fig. 1 der EP-A-109 063 wird ein hoch ausgetauschter Ca-Zeolith X für die Sauerstoffanreicherung von Luft empfohlen, wobei dargestellt wird, daß mit zunehmendem Ca-Gehalt des Zeolith X die N₂-O₂-Selektivität und damit die O₂-Ausbeute erhöht werden kann.

Aus JP 87/148 304 ist ein Sauerstoffanreicherungsprozeß bekannt, bei dem anstelle eines Adsorbers mit einer Zeolithschüttung ein Adsorber mit speziellen Anordnungen verschiedener Zeolithtypen eingesetzt wird. Der Adsorber enthält an der Lufteintrittsseite Zeolithe vom Na-X-, Na-Y- oder Ca-X-Typ und an der Luftaustrittsseite vom Ca-Na-A-Typ.

In Beispiel 3 der EP-A-374 631 wird in der Lufteintrittszone ein CaA-Zeolith mit niedriger N₂-Adsorption und an der Austrittszone ein CaA-Zeolith mit hoher N₂-Adsorption eingesetzt, wobei der CaO/Al₂O₃-Gehalt der Zeolithe des Beispiels 3 etwa gleich groß ist (0,75 CaO/Al₂O₃). Die unterschiedlichen N₂-Beladungen rühren von unterschiedlichen Aktivierungen her.

Aufgabe der vorliegenden Erfindung war es, ein energiegünstiges VSA-PVSA-Verfahren zur Sauerstoffanreicherung von Luft mit Hilfe einer verbesserten O₂-Ausbeute, d.h. einer verbesserten N₂-O₂-Selektivität der Gesamtschuttung zur Verfügung zu stellen.

Es wurde nun gefunden, daß überraschenderweise die Sauerstoffanreicherung von Luft mittels bestimmter Kombinationen spezieller Zeolithschüttungen mit erhöhter O₂-Ausbeute bzw. reduziertem Energieverbrauch bei Lufttemperaturen von 20 bis 50°C durchgeführt werden kann, wobei sich in der Lufteintrittszone des Adsorbers ein Ca-Zeolith X befindet, dessen CaO/Al₂O₃-Verhältnis 0,4 bis 0,75 beträgt.

Gegenstand der Erfindung ist ein Verfahren zur Sauerstoffanreicherung von Luft bei Temperaturen von 20 bis 50°C mittels Vakuum-Swing-Adsorption (VSA) oder Druck-Swing-Adsorption (PSA) oder mittels einer Kombination aus VSA und PSA, bei dem die Luft durch einen Adsorber geleitet wird, der mit Schüttungen aus Zeolithgranulaten gefüllt ist, welches dadurch gekennzeichnet ist, daß im Adsorber mindestens zwei Schüttungen vorliegen, wobei die Schüttung an der Lufteintrittsseite des Adsorbers aus Na-Ca-Zeolith X mit einem SiO₂/Al₂O₃-Verhältnis von 2,0 bis 2,5 und mit einem CaO/Al₂O₃-Verhältnis von 0,4 bis 0,75 besteht, das der Lufteintrittstemperatur angepaßt ist, und die Schüttung an der Luftaustrittseite des Adsorbers aus Na-Ca-Zeolith A mit einem CaO/Al₂O₃-Verhältnis von 0,5 bis 1,0 besteht oder aus Na-Ca-Zeolith X mit einem CaO/Al₂O₃-Verhältnis, das über dem CaO/Al₂O₃-Verhältnis des Na-Ca-Zeolithen-X an der Eintrittseite liegt und 0,5 bis 1,0 beträgt, besteht. Bei einer Lufteintrittstemperatur von 20 bis 30°C beträgt das CaO/Al₂O₃-Verhaltnis des Na-Ca-Zeolithen X an der Eintrittszone 0,4 bis 0,6, bei einer Lufteintrittstemperatur von 30 bis 40°C 0,55 bis 0,65 und bei einer Lufteintrittstemperatur von 40 bis 50°C 0,6 bis 0,75.

Bevorzugt liegt die Schüttung an der Lufteintrittsseite des Adsorbers in einer Menge von 25 bis 75 Gew.-%, besonders bevorzugt von 25 bis 50 Gew.-%, bezogen auf die Gesamtmenge der Schüttungen, vor.

Der Anteil der Schüttung an der Luftaustrittsseite, insbesondere wenn es sich um Na-Ca-Zeolith X mit einem CaO/Al₂O₃-Verhältnis von 0,75 bis 1,0 handelt, ist um so höher je höher die Temperatur der Luft an der Lufteintrittsseite des Adsorbers ist.

Die eingesetzten Na-Ca-Zeolithe X weisen vorzugsweise ein SiO₂/Al₂O₃-Verhältnis von 2,0 bis 3,0, besonders bevorzugt von 2,0 bis 2,5, auf.

Bei den Zeolithschüttungen handelt es sich vorzugsweise um einen Zeolithen je Schüttung. In einer Schüttung kann der Zeolith jedoch auch mit unterschiedlichen Ca-Gehalten vorliegen, wobei der Zeolith bevorzugt in Richtung des Luftaustrittes die höheren Ca-Gehalte aufweist.

Das erfindungsgemäße Verfahren wird prinzipiell wie herkömmliche PSA-bzw. VSA-Verfahren durchgeführt. Derartige Verfahren werden z.B. in Gas Separation und Purification 1991, Vol 5, June, Seite 89 bis 90 beschrieben.

Neben den oben genannten Ca-ausgetauschten Zeolithen A und X, insbesondere den hochausgetauschten, können auch mit anderen Kationen ausgetauschte Zeolithe verwendet werden. So kann das Calcium teilweise oder ganz durch Strontium oder auch Magnesium ersetzt werden (siehe auch US-3 313 091).

Es kann angebracht sein, zur Trocknung des Gasstroms (Luftstroms) zusätzlich eine Schicht, bestehend z.B. aus Kieselgel, vor die eigentlichen Adsorptionsschichten einzusetzen.

Die Erfindung soll anhand der nachfolgenden Beispiele naher erläutert werden.

### Beispiele

### Herstellung der Zeolithgranulate

### Probe A:

Ein Na-Ca-Zeolith X-Granulat wurde entsprechend EP-A 0 170 026, Beispiel 15, hergestellt, wobei die Behandlung mit CaCl₂-Lösung 3 mal erfolgte und bei 600°C mit trockenem Stickstoff kalziniert wurde. Der Ca-Gehalt lag bei einem CaO/Al₂O₃-Verhältnis von 0,96. Das SiO₂/Al₂O₃-Verhältnis des Zeolithen betrug 2,35.

### Probe B:

Ein Na-Ca-Zeolith X-Granulat wurde entsprechend EP-A 0 170 026, Beispiel 15, hergestellt, wobei die Behandlung mit CaCl₂-Lösung 1 mal mit reduzierter Austauschzeit erfolgte und bei 600°C mit trockenem Stickstoff kalziniert wurde. Der Ca-Gehalt lag bei einem CaO/Al₂O₃-Verhältnis von 0,6. Das SiO₂/Al₂O₃-Verhältnis des Zeolithen betrug 2,35.

### Probe C:

Ein Na-Ca-Zeolith A-Granulat wurde entsprechend EP-A 0 170 026, Beispiel 2, hergestellt. Die Kalzinierung erfolgte mit Stickstoff bei 500 bis 600°C. Der Ca-Gehalt lag bei einem CaO/Al₂O₃-Verhältnis von 0,72.

### Probe D:

Ein Na-Ca-Zeolith X-Granulat wurde entsprechend EP-A 0 170 026, Beispiel 15, hergestellt, wobei die Behandlung mit CaCl₂-Lösung 1 mal mit reduzierter Austauschzeit erfolgte und bei 600°C mit trockenem Stickstoff kalziniert. Der Ca-Gehalt lag bei einem CaO/Al₂O₃-Verhältnis von 0,43. Das SiO₂/Al₂O₃-Verhältnis des Leolithen betrug 2,35.

### Probe E:

Ein Na-Ca-Zeolith X-Granulat wurde entsprechend EP-A 0 170 026, Beispiel 15, hergestellt, wobei die Behandlung mit CaCl₂-Lösung 1 mal erfolgte und bei 600°C mit trockenem Stickstoff kalziniert wurde. Der Ca-Gehalt lag bei einem CaO/Al₂O₃-Verhältnis von 0,72. Das SiO₂/Al₂O₃-Verhältnis des Zeolithen betrug 2,35.

### Probe F:

Ein Na-Ca-Zeolith A-Granulat wurde entsprechend EP-A 0 170 026, Beispiel 2, hergestellt und mit trockener Luft bei 600°C aktiviert. Der Ca-Gehalt lag bei einem CaO/Al₂O₃-Verhältnis von 0,72.

### Probe G:

Ein Na-Ca-Zeolith X-Granulat wurde entsprechend EP-A 0 170 026, Beispiel 15, hergestellt, wobei die Behandlung mit CaCl₂-Lösung zweimal erfolgte und bei 600°C mit trockenem Stickstoff kalziniert wurde. Der Ca-Gehalt lag bei einem CaO/Al203-Verhältnis von 0,83. Das SiO2/Al203-Verhältnis des Zeolithen betrug 2,35.

**Tabelle 1**

| Adsorptionseigenschaften der Proben A/B/C/D/E/F/G | | | | | | | |
|---|---|---|---|---|---|---|---|
| | Probe A | Probe B | Probe C | Probe D | Probe E | Probe F | ProbeG |
| Zeolith | NaCa-X | NaCa-X | NaCa-A | NaCa-X | NaCa-X | NaCa-A | NaCa-X |
| CaO/Al₂O₃ | 0,96 | 0,6 | 0,72 | 0,43 | 0,72 | 0,72 | 0,83 |
| Stickstoffadsorption bei 1 atm, 25°C in Nl/kg | 18 | 12 | 14 | 11 | 12 | 8 | 15,5 |
| Sauerstoffadsorption bei 1 atm, 25°C in Nl/kg | 5,8 | 4,3 | 4,8 | 4,3 | 4,5 | 2,9 | 5,1 |
| Verhältnis N₂/O₂ bei 1 atm, 25°C | 3,10 | 2,79 | 2,92 | 2,55 | 2,67 | 2,76 | 3,04 |

In allen Versuchsdurchführungen bleiben folgende Daten konstant:

| | |
|---|---|
| Adsorberinnendurchmesser: | 1 000 mm |
| Adsorberoberschütthöhe: | 2 200 mm |
| Enddruck beim Evakuieren: | 200 mbar |

120 kg mittelporiges Kieselgel am Lufteintrittsende des Adsorbers; darüber 1.400 Liter pro Adsorber an granulierten Zeolithen, Körnung 2 bis 3 mm.

Die Anlage, in der die Sauerstoffanreicherung durchgeführt wurde, ist schematisch in Figur 1 dargestellt.

Umgebungsluft wird über Gebläse G, Erhitzer H, Ventil 11A in Adsorber A (bei 1 bar (abs), mit 75 % rel. Feuchte) eingeleitet. Sauerstoffreiches Gas wird über Ventil 14A, Gebläse R (bei 1 bar (abs)) als Produkt abgezogen. Zeit der Lufttrennung ist 1 Minute; Ventile 12A, 13A sind geschlossen. Über den Erhitzer H können verschiedene Temperaturen der eintretenden Luft eingestellt werden.

Gleichzeitig wird Adsorber B über Ventil 12B und Vakuumpumpe V auf 200 mbar evakuiert, wobei die Ventile 11B, 13B, 14B des Adsorbers B geschlossen sind.

Gleichzeitig wird Adsorber C innerhalb einer Minute mit sauerestoffreichem Gas (Produkt) über Ventil 15, Ventil 13C, von 200 mbar auf 1 bar (abs) aufgefüllt, wobei Ventile 11C, 12C, 14C geschlossen sind.

Die Saugleistung der Vakuumpumpe V und damit der Enddruck des Vakuums kann verändert werden.

Zur Auswertung der Versuche wurde die produzierte Gasmenge mit einer O₂-Volumenkonzentration von 90 % und die über das Gebläse G zugeführte Luftmenge gemessen. Kenndaten der Güte des Verfahrens sind die produzierte sauerstoffreiche Luftmenge und die Sauerstoffausbeute (= O₂-Menge des Produktes zu O₂-Menge der eintretenden Luft).

### Beispiel 1 (Vergleich)

Probe A wurde im Adsorber eingesetzt. Die H₂-O-Restbeladung des aktivierten Zeolithen lag unter 0,5 Gew.-% (nach DIN 8948; P₂O₅-Methode). Die Zeolithmenge pro Adssorber betrug 905 kg. Die Sauerstoffanreicherung erfolgte gemäß obigen Ausführungen. Folgende Daten wurden ermittelt:

| | | |
|---|---|---|
| Temperatur der Luft am Eintritt [°C] | 30 | 40 |
| Produktmenge [Nm³/h] | 44 | 46,5 |
| O₂-Ausbeute [%] | 37 | 43 |

### Beispiel 2 (Vergleich)

Probe B wurde im Adsorber eingesetzt (905 kg/Adsorber). Die H₂O-Restbeladung des aktivierten Zeolithen lag unter 0,5 Gew.-%. Folgende Daten wurden ermittelt:

| | | |
|---|---|---|
| Temperatur der Luft am Eintritt [°C] | 30 | 40 |
| Produktmenge [Nm³/h] | 48 | 45 |
| O₂-Ausbeute [%] | 43 | 40 |

### Beispiel 3 (Vergleich)

Probe C wurde im Adsorber eingesetzt (905 kg/Adsrober). Die H₂O-Restbeladung des aktivierten Zeoliths lag unter 0,5 Gew.-%. Folgende daten wurden ermittelt:

| | | | | |
|---|---|---|---|---|
| Temperatur der Luft am Eintritt [°C] | 20 | 30 | 40 | 50 |
| Produktmenge [Nm³/h] | 48 | 48 | 49,5 | 49 |
| O₂-Ausbeute [%] | 39 | 43 | 46 | 46 |

### Beispiel 4 (Vergleich)

Über die Zone mit dem Trockenmittel wurden 450 kg Probe A und darüber 455 kg Probe C in den Adsorber gefüllt. Folgende Daten wurden ermittelt.

| | | | | |
|---|---|---|---|---|
| Temperatur der Luft am Eintritt [°C] | 20 | 30 | 40 | 50 |
| Produktmenge [Nm³/h] | 42 | 41 | 44,2 | 43,5 |
| O₂-Ausbeute [%] | 37 | 40 | 42 | 44,5 |

### Beispiel 5 (erfindungsgemäß)

Über die Trockenmittelzone wurden in den Adsorber 450 kg der Probe B und darüber 455 kg der Probe A eingefüllt.

| | | |
|---|---|---|
| Temperatur der Luft am Eintritt [°C] | 30 | 40 |
| Produktmenge [Nm³/h] | 49 | 50 |
| O₂-Ausbeute [%] | 46 | 49 |

### Beispiel 6 (erfindungsgemäß)

Über der Trockenmittelzone wurden in den Adsorber 450 kg der Probe B und darüber 455 kg der Probe C eingefüllt.

| | | | | |
|---|---|---|---|---|
| Temperatur der Luft am Eintritt [°C] | 20 | 30 | 40 | 50 |
| Produktmenge [Nm³/h] | 51 | 52 | 52,5 | 50 |
| O₂-Ausbeute [%] | 40,5 | 47 | 50 | 47 |

### Beispiel 7 (erfindungsgemäß)

Über der Trockenmittelzone wurden in den Adsorber 450 kg der Probe D und darüber 455 kg der Probe C eingefüllt.

| | | | |
|---|---|---|---|
| Temperatur der Luft am Eintritt [°C] | 20 | 30 | 40 |
| Produktmenge [Nm³/h] | 48 | 46 | 46,9 |
| O₂-Ausbeute [%] | 43 | 44 | 45,5 |

### Beispiel 8 (erfindungsgemäß)

Über der Trockenmittelzone wurden in den Adsorber 450 kg der Probe E und darüber 455 kg der Probe C eingefüllt.

| | | | |
|---|---|---|---|
| Temperatur der Luft am Eintritt [°C] | 30 | 40 | 50 |
| Produktmenge [Nm³/h] | 45,3 | 46,5 | 48 |
| O₂-Ausbeute [%] | 43 | 45,5 | 49 |

### Beispiel 9 (Vergleich, gemäß EP-A 0 374 631, Beispiel 3)

Über die Zone mit dem Trockenmittel wurden 450 kg der Probe F und darüber 455 kg der Probe C gefüllt. Folgende Daten wurden ermittelt:

| | | |
|---|---|---|
| Temperatur der Luft am Eintritt [°C] | 30 | 40 |
| Produktmenge [Nm³/h] | 48 | 49,5 |
| O₂-Ausbeute [%] | 44,05 | 47,5 |

### Beispiel 10 (Vergleich)

Über die Zone mit dem Trockenmittel wurden 450 kg der Probe G und darüber 455 kg der Probe A gefüllt. Folgende Daten wurden ermittel:

| | | |
|---|---|---|
| Temperatur der Luft am Eintritt [°C] | 30 | 40 |
| Produktmenge [Nm³/h] | 44 | 47 |
| O₂-Ausbeute [%] | 37 | 42,5 |

Es wurde gefunden, daß mit einem Adsoptionsbett bestehend aus zwei Schüttungen gegenüber einem Adsorptionsbett bestehend jeweils nur aus einer entsprechenden Einzelschüttung die Ausbeute verbessert wird.

Nach Tabelle 1 (N₂/O₂-Verhältnis) müßte die Probe A mit dem hohen Ca-Gehalt von 0,96 gegenüber der Probe B mit dem mittleren Ca-Gehalt von 0,6 bessere Eigenschaften bei der O₂-Anreicherung zeigen. Entgegen bisheriger Kenntnis hat aber im untersuchten Temperaturbereich von 30 bis 40°C die Probe B (Beispiel 2) eine höhere Ausbeute als Probe A (Beispiel 1).

Im untersuchten Temperaturbereich von 30 bis 40°C hat der eingesetzte Ca-Zeolith A (Probe C) bessere Eigenschaften als Probe B. Es war daher überraschend, daß mit der aus Kombination der Proben B und C noch bessere Ausbeuten als mit der Schüttung bestehend aus Probe C erreicht wurden.

Beispiel 10 zeigt im Vergleich zu Beispiel 3, daß durch eine Anordnung zweier Ca-Zeolith A-Schüttungen zwar eine Verbesserung der Ausbeute erreicht wird, diese Verbesserung jedoch nur etwa 1 % (abs.) beträgt und damit weit unter der vorteilhaften Einrichtung einer Zone aus einem Ca-Zeolith X am Adsorbereintritt liegt. Außerdem ist es nicht möglich, Ca-Zeolith A-Mischungen so herzustellen, daß eine optimale Angleichung an die Lufttemperatur erreicht wird. Während man bei Ca-Zeolith A-Mischungen einen großen Unterschied in den N2-Beladungen benötigt, ist bei Ca-Zeolith X nicht die N2-Beladung, sondern der Ca-Gehalt von entscheidender Bedeutung. Anscheinend beeinflußt der Ca-Gehalt des Ca-Zeolith X die N2/O2-Selektivität. Die N2-Beladung der Einzelkomponenten-Isotherme wird zwar mit dem Ca-Gehalt erhöht, macht sich im dynamischen Lufttrennprozess aber wenig bemerkbar.

Beispiel 4 zeigt, daß der eingesetzte Ca-Zeolith X mit sehr hohem CaO-Gehalt (Probe A; 0,96 CaO) im Bereich der Eintrittszone bei üblichen Eintrittstemperaturen von 20 bis 50°C keine verbesserten Ausbeuten gegenüber dem reinen Ca-Zeolith A (Beispiel 3) liefert.

Der Vergleich der Beispiele 6,7 und 8 zeigt, daß für einen Temperaturbereich von 20 bis 50°C der Ca-Gehalt des Ca-Zeolithen X in der Eintrittszone in Abhängigkeit von der Temperatur zwischen 0,4 und 0,75 liegen muß. Zu hoher oder zu niedriger Ca-Gehalt des Ca-Zeolith X reduziert die Ausbeute.

Tabelle 2 zeigt, daß z.B. im Bereich von 30 bis 40°C das CaO/Al₂O₃-Verhältnis etwa 0,6 im Ca-Zeolithen X in der Eintrittszone betragen sollte. Die Ausbeuten dieser Anordnung (Beispiel 6) sind wesentlich höher als das erwartete arithmetische Mittel der Anordnungen aus Beispiel 7 (0, 43 CaO/Al₂O₃) und Beispiel 8 (0,72 CaO/Al₂O₃).

**Tabelle 2**

| | CaX-Zeolith | O₂-Ausbeute 30°C | O₂-Ausbeute 40°C |
|---|---|---|---|
| Beispiel 7 | 0,43 CaO/Al₂O₃ | 44 | 45,5 |
| Beispiel 6 | 0,60 CaO/Al₂O₃ | 46 | 49 |
| Beispiel 8 | 0,72 CaO/Al₂O₃ | 43 | 45,5 |
| Rechnerisch ermittelt (arithmetisches Mittel von Bsp. 7 und 8) | 0,6 CaO/Al₂O₃ | 43,41 | 45,5 |

In der Kombination CaX-Zeolith in der Eintrittszone und CaA-Zeolith in der Austrittszone ergibt nicht jeder CaX-Zeolith eine Verbesserung. Es ist auch überraschend, daß ein CaX-Zeolith, der als Einzelschüttung schlechter in der Ausbeute ist als ein Ca-Zeolith A in der Einzelschüttung, in Kombination mit diesem Ca-Zeolith A bessere Ausbeuten liefert (Vergleich der Beispiele 2 und 3 mit Beispiel 6).

Bei einer Lufttemperatur von 20°C zeigt das erfindungsgemäße Beispiel 7 mit Ca-Zeolith X in der Eintrittszone mit einem CaO/Al₂O₃-Verhältnis von 0,43 bessere Ausbeuten als Beispiel 6 mit Ca-Zeolith X mit 0,6 CaO/Al₂O₃ und ebenfalls bessere Eigenschaften als Beispiel 3 (Schüttung bestehend nur aus CaA-Zeolith).

Beispiel 4 zeigt, daß in der Eintrittszone der Ca-Zeolith X mit hohem Ca-Austauschgrad von 0,96 für Temperaturen von 20 bis 50°C nicht einsetzbar ist und bei 20 bis 50°C schlechter als ein Ca-Zeolith X mit geringerem CaO-Gehalt ist.

Bei einer Lufttemperatur von 50°C zeigt das erfindungsgemäße Beispiel 8 mit Ca-Zeolith X mit 0,72 CaO/Al₂O₃ in der Eintrittszone bessere Ausbeuten als die Kombination mit Ca-Zeolith X mit 0,96 CaO/Al₂O₃ und ebenfalls bessere Eigenschaften als die Schüttung in Beispiel 3 (bestehend nur aus CaA-Zeolith).

Beispiel 5 zeigt, daß im Temperaturbereich der eintretenden Luft von 30 bis 40°C eine Schüttung aus ausgetauschtem Ca-Zeolith X (Probe B) in der Eintrittszone und hoch ausgetauschtem Ca-Zeolith X in der Austrittszone (Probe A) bessere O₂-Ausbeuten liefert als die entsprechenden Einzelschüttungen (Beispiele 2 und 1).

Beispiel 10 zeigt, daß im untersuchten Temperaturbereich eine Ca-Zeolith X-Anordnung mit CaO/Al203-Verhaltnissen von über 80 % keine wesentlichen Verbesserungen bringt, d. h. die Ausbeute durch einen hochausgetauschten Ca-Zeolitzh X am Austritt nicht verbessert werden kann.

## Patentansprüche

1. Verfahren zur Sauerstoffanreicherung von Luft bei Temperaturen von 20 bis 50°C mittels VSA oder PSA oder mittels einer Kombination aus VSA und PSA, bei dem die Luft durch einen Adsorber geleitet wird, der mit Schüttungen aus Zeolithgranulaten gefüllt ist, dadurch gekennzeichnet, daß im Adsorber mindestens zwei Schüttungen vorliegen, wobei die Schüttung an der Lufteintrittsseite des Adsorbers aus Na-Ca-Zeolith X mit einem SiO₂/Al₂O₃-Verhältnis von 2,0 bis 2,5 und einem CaO/Al₂O₃-Verhältnis von 0,4 bis 0,75 besteht, das der Lufteintrittstemperatur angepasst ist, wobei bei einer Lufteintrittstemperatur von 20 bis 30°C das CaO/Al₂O₃-Verhältnis des Na-Ca-Zeolithen X an der Eintrittszone 0,4 bis 0,6, bei einer Lufteintrittstemperatur von 30 bis 40°C das CaO/Al₂O₃-Verhältnis des Na-Ca-Zeolithen X an der Eintrittszone 0,55 bis 0,65 und bei einer Lufteintrittstemperatur von 40 bis 50°C das CaO/Al₂O₃-Verhältnis des Na-Ca-Zeolithen X an der Eintrittszone 0,6 bis 0,75 beträgt, und die Schüttung an der Luftaustrittsseite des Adsorbers aus Na-Ca-Zeolith A mit einem CaO/Al₂O₃-Verhältnis von 0,5 bis 1,0 besteht oder aus Na-Ca-Zeolith X mit einem CaO/Al₂O₃-Verhältnis von 0,5 bis 1,0, das über dem CaO/Al₂O₃-Verhältnis des Na-Ca-Zeolithen X an der Eintrittsseite liegt, besteht.

2. Verfahren nach Anspruch 1, dadurch gekennzeichnet, daß die Schüttung in der Lufteintrittszone des Adsorbers in einer Menge von 25 bis 75 Gew.-% der Gesamtzeolithschüttung vorliegt.

3. Verfahren nach Anspruch 2, dadurch gekennzeichnet, daß die Schüttung in der Lufteintrittszone des Adsorbers in einer Menge von 25 bis 50 Gew.-% der Gesamtzeolithschüttung vorliegt.

## Claims

1. Process for the oxygen enrichment of air at temperatures of 20 or 50°C by means of VSA or PSA or by means of a combination of VSA and PSA, in which the air is passed through an adsorber which is filled with packings of zeolite pellets, which process is characterised in that at least two packings are present in the adsorber, wherein the packing at the air inlet side of the adsorber consists of Na-Ca zeolite X with an SiO₂/Al₂O₃ ratio of 2.0 to 2.5 and with a CaO/Al₂O₃ ratio of 0.4 to 0.75, which ratio is adapted to the air inlet temperature, wherein at an air inlet temperature of 20 to 30°C the CaO/Al₂O₃ ratio of the Na-Ca zeolites X at the inlet zone is 0.4 to 0.6, at an air inlet temperature of 30 to 40°C the CaO/Al₂O₃ ratio of the Ca zeolite X at the inlet zone is 0.55 to 0.65 and at an air inlet temperature of 40 to 50°C the CaO/Al₂O₃ ratio of the Na-Ca zeolite X at the inlet zone is 0.6 to 0.75, and the packing at the air outlet side of the adsorber consists of Na-Ca zeolite A with a CaO/Al₂O₃ ratio of 0.5 to 1.0 or of Na-Ca zeolite X with a CaO/Al₂O₃ ratio of 0.5 to 1.0, which is above the CaO/Al₂O₃ ratio of the Na-Ca zeolite X at the inlet side.

2. Process according to claim 1, characterised in that the packing in the air inlet zone of the adsorber is present in a quantity of 25 to 75 wt.% of the total zeolite packing.

3. Process according to claim 2, characterised in that the packing in the air inlet zone of the adsorber is present in a quantity of 25 to 50 wt.% of the total zeolite packing.

## Revendications

1. Procédé d'enrichissement de l'air en oxygène à des températures de 20 à 50°C par la technique VSA ou PSA ou par une combinaison des techniques VSA et PSA, dans lequel on fait passer l'air à travers une colonne d'adsorption remplie de garnissages de granulés de zéolite, caractérisé en ce qu'il y a au moins deux garnissages dans la colonne d'adsorption, le garnissage du côté de l'entrée de l'air de la colonne d'adsorption étant constitué d'une zéolite X au Na-Ca avec un rapport SiO₂/Al₂O₃ compris entre 2,0 et 2,5 et un rapport CaO/Al₂O₃ compris entre 0,4 et 0,75 et adapté à la température d'entrée de l'air de sorte que, à une température d'entrée de l'air de 20 à 30°C, le rapport CaO/Al₂O₃ de la zéolite X au Na-Ca dans la zone d'entrée est compris entre 0,4 et 0,6, qu'à une température d'entrée de l'air de 30 à 40°C, le rapport CaO/Al₂O₃ de la zéolite X au Na-Ca dans la zone d'entrée est compris entre 0,55 et 0,65, et qu'à une température d'entrée de l'air de 40 à 50°C, le rapport CaO/Al₂O₃ de la zéolite X au Na-Ca dans la zone d'entrée est compris entre 0,6 et 0,75, et le garnissage du côté de la sortie de l'air de la colonne d'adsorption étant constitué d'une zéolite A au Na-Ca ayant un rapport CaO/Al₂O₃ compris entre 0,5 et 1,0 ou d'une zéolite X au Na-Ca dont le rapport CaO/Al₂O₃ est compris entre 0,5 et 1,0 et est supérieur au rapport CaO/Al₂O₃ de la zéolite X au Na-Ca du côté de l'entrée.

2. Procédé selon la revendication 1, caractérisé en ce que la quantité de garnissage dans la zone d'entrée de l'air de la colonne d'adsorption est comprise entre 25 et 75 % en masse du garnissage total de zéolite.

3. Procédé selon la revendication 2, caractérisé en ce que la quantité de garnissage dans la zone d'entrée de l'air de la colonne d'adsorption est comprise entre 25 et 50 % en masse du garnissage total de zéolite.
